# EUROPEAN PATENT APPLICATION

(11) **EP 3 817 441 A1**
(43) Date of publication of application: **05.05.2021**
(21) Application number: 18924845.3
(22) Date of filing: 28.06.2018
(51) Int. Cl.: H04W 24/10, H04W 16/32, H04W 72/04

(54) **USER TERMINAL**

(71) Applicant: NTT DoCoMo, Inc., Tokyo 100-6150 (JP)
(72) Inventor: HARADA, Hiroki, Tokyo 100-6150 (JP); FUJIMURA, Naoki, Tokyo 100-6150 (JP); TAKADA, Takuma, Tokyo 100-6150 (JP)
(74) Representative: Hoffmann Eitle
(86) International application number: PCT/JP2018/024745
(87) International publication number: WO 2020/003476

(57) **Abstract**

Measurement periods for quality measurement are specified for a first signal and a second signal. A user terminal includes: a reception section that receives the first signal based on first radio communication and the second signal based on second radio communication; and a control section that controls priority levels for quality measurements of the first radio communication and the second radio communication. The quality measurements are performed using the measurement periods.

## Description

### Technical Field

The present disclosure relates to a user terminal.

### Background Art

Long Term Evolution (LTE) has been specified for achieving a higher data rate, lower latency, and the like in a Universal Mobile Telecommunication System (UMTS) network (see Non-Patent Literature (hereinafter referred to as "NPL") 1). Future systems of LTE have also been studied for achieving a broader bandwidth and a higher speed based on LTE. Examples of future systems of LTE include the systems called LTE-Advanced (LTE-A), Future Radio Access (FRA), 5th generation mobile communication system (5G), 5G plus (5G+), New Radio Access Technology (New-RAT; NR), and the like.

A measurement gap used for measuring signal quality of a cell is also known (NPLs 1, 2, and 3).

### Citation List

### Non-Patent Literature

NPL 1
   3GPP TS 36.331 v15.2.1, "Evolved Universal Terrestrial Radio Access (E-UTRA); Radio Resource Control (RRC); Protocol specification (Release 15)," March 2018, June 2018
NPL2
   3GPP TS 38.133 v15.1.0, "NR; Requirements for support of radio resource management (Release 15)," March 2018
NPL3
   3GPP TS 38.331 v15.2.1, "NR; Radio Resource Control (RRC) protocol specification (Release 15)," June 2018

### Summary of Invention

### Technical Problem

However, operation of a user terminal in a case of measurement gap sharing for measurement of the signal quality of different cells still has not been studied extensively.

One object of the present disclosure is to provide a user terminal which appropriately operates when a measurement gap is shared for measurement of the signal quality of different cells.

### Solution to Problem

A user terminal according to one aspect of the present disclosure includes: a reception section that receives a first signal based on first radio communication and a second signal based on second radio communication, measurement periods for quality measurement being specified for the first and the second signals; and a control section that controls priority levels for quality measurements of the first radio communication and the second radio communication, the quality measurements being performed using the measurement periods.

### Advantageous Effects of Invention

According to the present disclosure, the user terminal appropriately operates when the measurement gap is shared for measurement of the signal quality of different cells.

### Brief Description of Drawings

FIG. 1 illustrates an example of a relationship among a radio base station, user terminal, and cell according to one embodiment of the present invention;
FIG. 2 is an explanatory view for describing a per-UE-gap case;
FIG. 3 is an explanatory view for describing a per-FR-gap case;
FIG. 4 is an explanatory view for describing Case 1 concerning measurement of the frequency of an NR serving cell;
FIG. 5 is an explanatory view for describing Case 2 concerning the measurement of the frequency of the NR serving cell;
FIG. 6 illustrates an example of a relationship between bit values and values of parameter X;
FIG. 7 illustrates MeasGapSharingConfig information element and MeasGapSharingConfig field description disclosed in NPL 1;
FIG. 8 illustrates MeasGapSharingConfig Information element and MeasGapSharingConfig field description disclosed in NPL 3;
FIG. 9 illustrates an example of inter-RAT gap utilization, NR intra-frequency gap utilization, and NR inter-frequency gap utilization;
FIG. 10 illustrates an example of the inter-RAT gap utilization, NR intra-frequency gap utilization, and NR inter-frequency gap utilization according to Embodiment 1;
FIG. 11 illustrates an example of the inter-RAT gap utilization, NR intra-frequency gap utilization, and NR inter-frequency gap utilization according to Embodiment 2;
FIG. 12 illustrates an example of the inter-RAT gap utilization, NR intra-frequency gap utilization, and NR inter-frequency gap utilization according to Embodiment 3;
FIG. 13 illustrates an example of configuration of a radio base station and a user terminal;
FIG. 14 illustrates an example of configuration of a transmitter;
FIG. 15 illustrates an example of configuration of a receiver; and
FIG. 16 illustrates an example of hardware configuration of the radio base station and the user terminal according to the present disclosure.

### Description of Embodiments

### (One Embodiment)

Hereinafter, an embodiment of the present disclosure will be described with reference to the accompanying drawings.

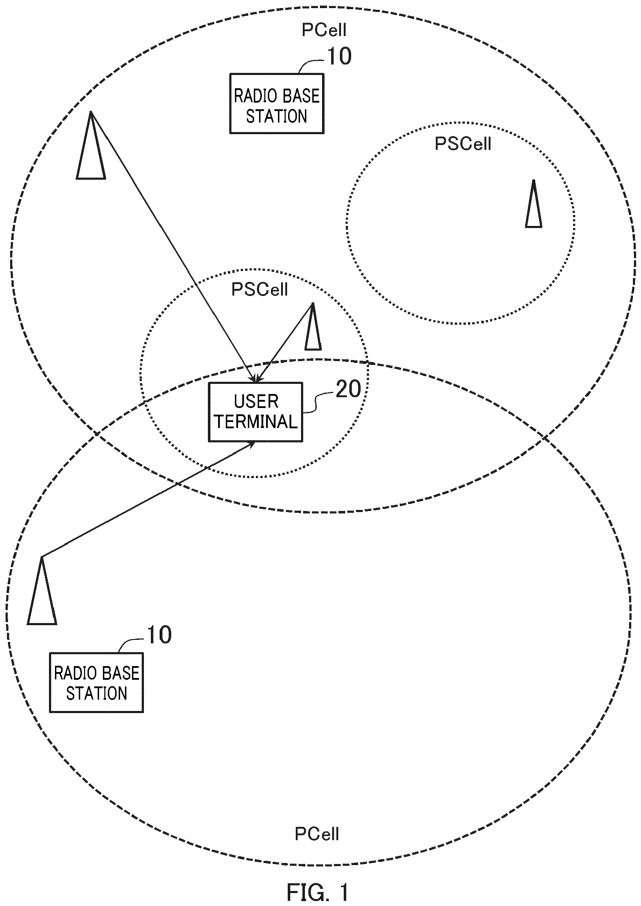

FIG. 1 illustrates an example of a relationship among a radio base station, user terminal, and cell according to one embodiment of the present invention.

Radio base station (hereinafter, referred to as "base station") 10 may be able to form a Primary Cell (PCell), and a Secondary Cell (SCell) or Primary SCell (PSCell) whose service area at least partially overlaps with the service area of the PCell as illustrated in FIG. 1. Note that, the PCell is an example of a first cell and the SCell or PSCell is an example of a second cell.

For example, user terminal (hereinafter, referred to as "terminal") 20 makes LTE connection in the PCell and makes NR connection in a small cell. Terminal 20 may be connectable to both of the PCell and the PSCell by Carrier Aggregation (CA) or the like.

The terminal measures the signal quality of each cell by utilizing a measurement gap to perform a handover. Such a handover ensures the connectivity of moving terminal 20.

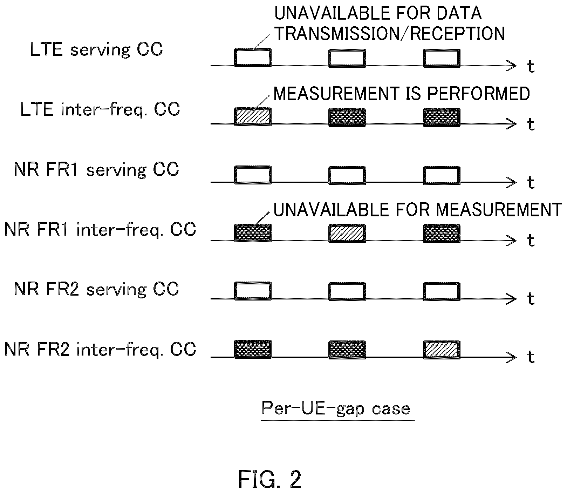

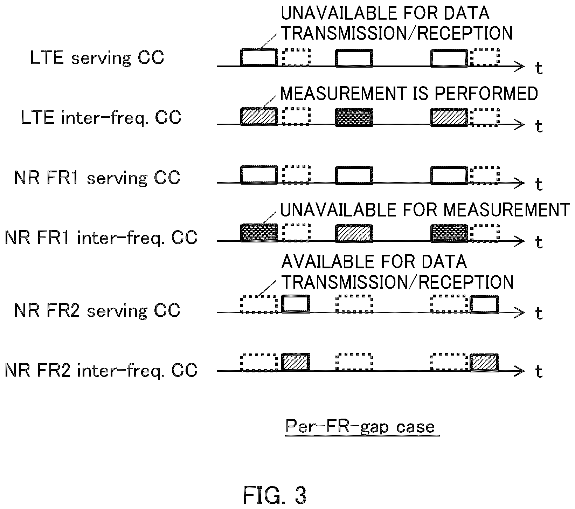

Next, the measurement gap for 5G is described with reference to FIGS. 2 and 3. Note that, the measurement gap may hereinafter be expressed as "gap."

The measurement gap for 5G terminals includes a per-UE-gap and per-FR-gap. Note that, "UE" is an abbreviation for "User Equipment" and "FR" is an abbreviation for "Frequency Range."

In the per-UE-gap case, the signal quality of NR FR1, NR FR2, and inter-RAT is measured in the gap configured with a single gap configuration. FR1 is from 450 MHz to 6.0 GHz, for example, and FR2 is from 24.25 GHz to 52.6 GHz, for example. In addition, the inter-RAT frequency band may be the same as the LTE frequency band.

For example, a common gap timing may be shared between an LTE inter-frequency Carrier Component (CC), NR FR1 inter-frequency CC, and NR FR2 inter-frequency CC in the per-UE-gap case as illustrated in FIG. 2. Note that, the LTE inter-frequency CC may be an example of inter-RAT frequency. Note also that, the NR FR1 inter-frequency CC may be an example of NR FR1 frequency. Note also that, the NR FR2 inter-frequency CC may be an example of NR FR2 frequency. In this case, terminal 20 may measure the LTE inter-frequency CC, NR FR1 inter-frequency CC, and NR FR2 inter-frequency CC one by one in each gap as illustrated in FIG. 2 (see the hatched parts in FIG. 2).

In the per-FR-gap case, the signal quality of NR FR1 and inter-RAT is measured in the gap configured with a single gap configuration, and the signal quality of NR FR2 is measured in the gap configured with another gap configuration.

For example, in the per-FR-gap case, a common gap timing is shared between the LTE inter-frequency CC and the NR FR1 inter-frequency CC as illustrated in FIG. 3. In addition, a gap timing for the NR FR2 inter-frequency CC may be different from the gap timing for the LTE inter-frequency CC and the NR FR1 inter-frequency CC. In this case, terminal 20 may perform the measurement for the LTE inter-frequency CC and the NR FR1 inter-frequency CC alternately in each gap, and may perform the measurement for the NR FR2 inter-frequency CC in every gap as illustrated in FIG. 3 (see the hatched parts in FIG. 3). Note that, as for the LTE inter-frequency CC and the NR FR1 inter-frequency CC, data may be transmittable and receivable at the gap timing of the NR FR2 inter-frequency CC (see the dotted-line parts in FIG. 3). Note also that, as for the NR FR2 inter-frequency CC, data may be transmittable and receivable at the gap timing of the LTE inter-frequency CC and the NR FR1 inter-frequency CC (see the dotted line parts in FIG. 3).

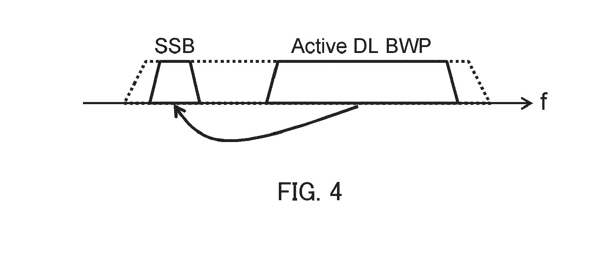

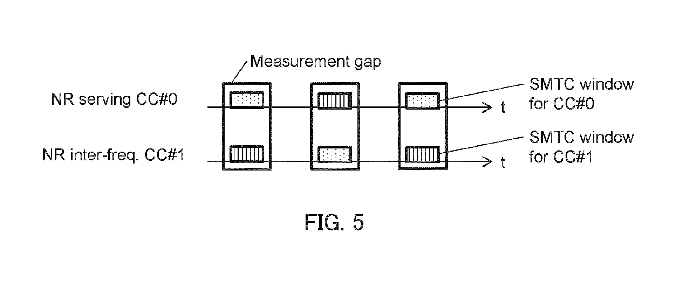

Next, a description will be given of measurement of the frequency of an NR serving cell with reference to FIGS. 4 and 5.

When the frequency of the NR serving cell is measured (intra-frequency measurement), there is a case where the timings of the measurement gap are used, as exemplified in following Cases 1 and 2.
(Case 1) Case 1 is a case where a bandwidth part which does not include the frequency band of Synchronization Signal Block (SSB) is configured as active Downlink Bandwidth Part (DL BWP) as illustrated to FIG. 4. In this case, frequency returning is necessary for Radio Resource Management (RRM) measurement; however, data transmission/reception cannot be performed during the measurement, so that the gap timing is used.
(Case 2) Case 2 is a case where the timing or periodicity of Synchronization Signal (SS)/Physical Broadcast Channel (PBCH) block based Measurement Timing Configuration (SMTC) completely overlaps with the timing or periodicity of the measurement gap as illustrated in FIG. 5. In this case, the gap overlapping with the SMTC window is used as illustrated in FIG. 5.

Basically, different frequencies cannot be measured simultaneously at each measurement gap timing. Accordingly, a measurement gap sharing method is thinkable in order to measure an intra-frequency, and an inter-frequency and/or inter-RAT. In this case, it is necessary to determine the ratio between the intra-frequency measurement and the inter-frequency measurement and/or inter-RAT measurement. Note that, there may be a situation like the aforementioned Case 1 also in LTE-M (category M) for lower power consumption terminals.

For the aforementioned reasons, the measurement gap sharing is discussed in §9.1.2 "Measurement gap" of NPL 2.

### <Measurement Gap Sharing>

Next, the measurement gap sharing is described.

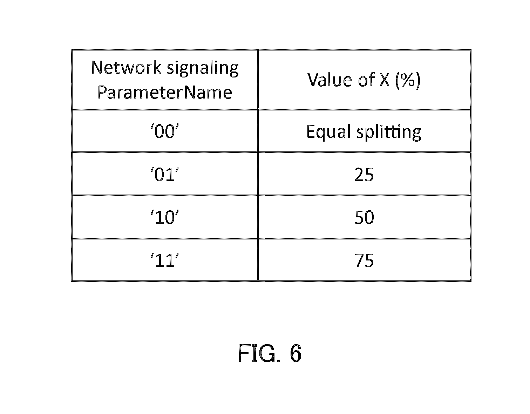

For example, a gap sharing factor (Kᵢₙₜₑᵣ) is taken into consideration in the performance of inter-frequency measurement and the performance of inter-RAT measurement. Here, Kᵢₙₜₑᵣ may be equal to 1/(100 - X) × 100. The value of X may, for example, be associated with a signaled bit value as illustrated in FIG. 6. For example, when the bit value of "10" is signaled, Kᵢₙₜₑᵣ may be equal to 1/(100 - 50) × 100 = 2. Note that, "equal splitting" illustrated in FIG. 6 will be described below.

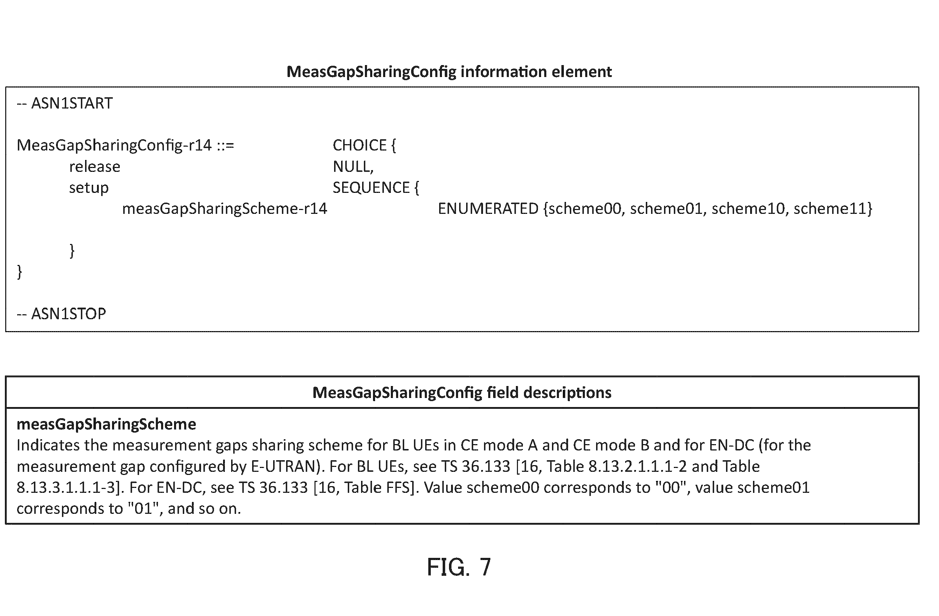

For the configuration of measurement gap sharing, §6.3.5 "Measurement information elements" of TS36.331 (NPL 1) describes a MeasGapSharingConfig information element and MeasGapSharingConfig field description as illustrated in FIG. 7.

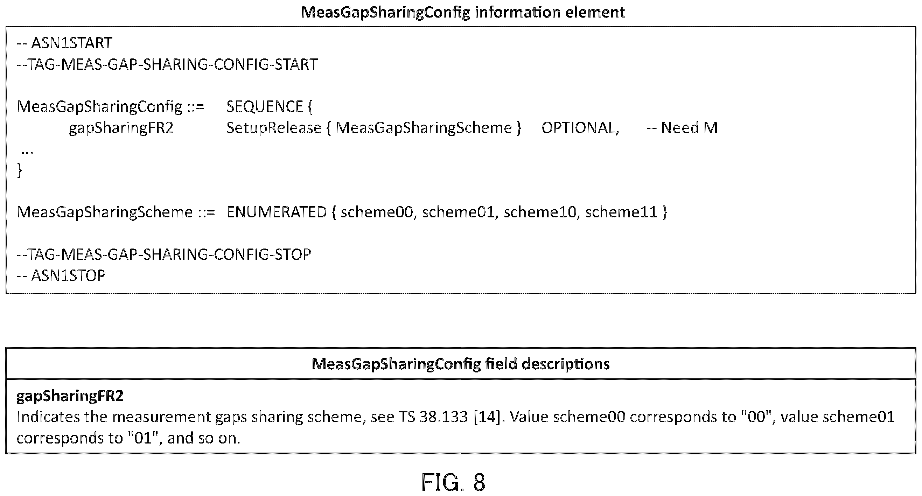

Moreover, §6.3.2 "Radio resource control information elements" of NPL 3 describes the MeasGapSharingConfig Information element and MeasGapSharingConfig field description as illustrated in FIG. 8.

In the current specification described in NPL 2, a measurement delay in each carrier is intended to be controlled by notifying one of "equal splitting," "25," "50," and "75" as a gap sharing scheme so as to change, based on such notification, the gap utilization ratio between the NR intra-frequency measurement and the NR inter-frequency measurement & inter-RAT measurement.

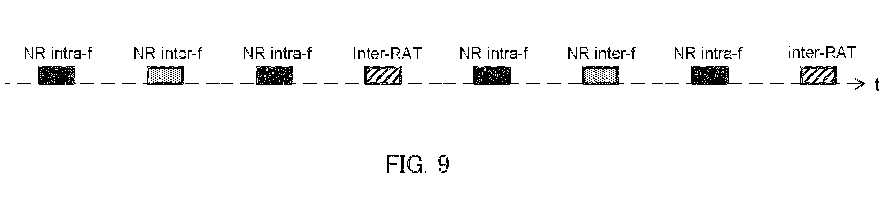

For example, when "50" is notified as the gap sharing scheme, following (A1) and (A2) are considered.
(A1) Requirements of the delay are specified on the assumption that 50% of the gap timings (once every two gap timings) is used for the NR intra-frequency measurement and the remaining 50% of the gap timings (once every two gap timings) is used for the NR inter-frequency measurement & inter-RAT measurement.
(A2) In a case where a plurality of measurement target carriers are present when the remaining 50% of the gap timings (once every two gap timings) is used for the NR inter-frequency measurement & inter-RAT measurement, the gap timings are further divided between the measurement target carriers. For example, when there is one measurement target carrier for each of the NR inter-frequency and inter-RAT, the gap timings of once every two gap timings are further divided between the two carriers. In this case, the gap utilization of each carrier (the NR inter-frequency or inter-RAT measurement) accounts for once every four gap timings as illustrated in FIG. 9. Therefore, the measurement delay is four times greater than in a case where the gap is used for only one carrier.

In LTE-NR Dual connectivity (non-standalone) or the like, the LTE PCell (see FIG. 1) is important for ensuring connectivity. Therefore, there may be cases where it is not preferable to equivalently deal with the inter-RAT (LTE inter-frequency) measurement performed for an inter-frequency handover and the NR inter-frequency measurement performed for adding the NR SCell (see FIG. 1).

In this respect, a description will be given of a method in the present embodiment for making it possible to appropriately control, even during NR communication, the priority level of gap utilization of different RAT (e.g., LTE) measurement performed for ensuring connectivity for the purpose of improving the connection stability of moving terminal 20.

Specifically, a description will be given of a method in the present embodiment for controlling, for each RAT, a measurement priority level of a measurement target carrier to be measured using the measurement gap. Examples of this method include following (B1) and (B2).
(B1) Different gap sharing factors (Kᵢₙₜₑᵣ) are applied between the LTE intra-frequency measurement and the NR inter-frequency measurement. In this case, the gap utilization ratio between the LTE inter-frequency measurement and the NR intra-frequency measurement & NR inter-frequency measurement (& another inter-RAT measurement) may be signaled.
(B2) The signaling from the network (e.g., base station) is used for switching among the LTE inter-frequency measurement, NR intra-frequency measurement, and NR inter-frequency measurement in terms of which is to be prioritized. Alternatively, the signaling is used for switching among the gap utilization ratios of the LTE inter-frequency measurement, NR intra-frequency measurement, and NR inter-frequency measurement.

Next, Examples 1 to 3 about aforementioned (B1) and (B2) are described.

### <Example 1>

In Example 1, the gap utilization ratio of the LTE inter-frequency measurement is set to a predetermined value, and the gap utilization ratio between the NR intra-frequency measurement with the gap and the NR inter-frequency measurement is determined using a parameter. Examples of the parameter include MeasGapSharingScheme (measGapSharingScheme-r14).

Specifically, the gap sharing factor (Kᵢₙₜₑᵣ) with respect to the LTE inter-frequency measurement in the case of E-UTRA-NR Dual Connectivity (EN-DC) is fixed independently of a scheme indicated by MeasGapSharingScheme, or, independently of the number of measurement target carriers of the NR intra-frequency measurement with the gap & NR inter-frequency measurement.

In this case, MeasGapSharingScheme may be used to indicate the ratio between the NR intra-frequency measurement with the gap and the NR inter-frequency measurement, or to indicate whether or not the equal splitting is applied to this ratio.

For example, the ratio between the NR intra-frequency measurement with the gap and the NR inter-frequency measurement may be associated with each of the bit values indicated by MeasGapSharingScheme as follows. Note that, the following values of the ratio may be mere examples and may also be any values.
- Bit value "00": "equal splitting" is applied to the ratio between the NR intra-frequency measurement with the gap and the NR inter-frequency measurement
- Bit value "01": the ratio of the NR intra-frequency measurement with the gap is "50%" and the ratio of the NR inter-frequency measurement is "50%"
- Bit value "10": the ratio of the NR intra-frequency measurement with the gap is "25%" and the ratio of the NR inter-frequency measurement is "75%"
- Bit value "11": the ratio of the NR intra-frequency measurement with the gap is "75%" and the ratio of the NR inter-frequency measurement is "25%"

For example, it is supposed that the gap utilization ratio of the LTE inter-frequency measurement is fixed at 50% and the bit value indicated by MeasGapSharingScheme is "01." In this case, the ratio of the NR intra-frequency measurement with the gap of "50%" and the ratio of the NR inter-frequency measurement of "50%" are applied to the remaining 50%. Therefore, the gap utilization ratio of the NR intra-frequency measurement with the gap is "25%" and the gap utilization ratio of the NR inter-frequency measurement is "25%."

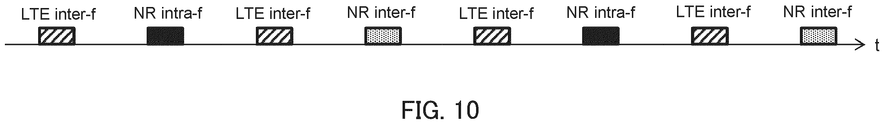

In this case, measurement is performed for the LTE inter-frequency by using the gap and once every two gap timings (50%) as illustrated in FIG. 10. In addition, the NR intra-frequency measurement with the gap is performed using the gap and once every four gap timings (25%) and the NR inter-frequency measurement is also performed using the gap and once every four gap timings (25%).

For example, it is supposed that the gap utilization ratio of the LTE inter-frequency measurement is fixed at 60% and the bit value indicated by MeasGapSharingScheme is "00." In this case, the remaining ratio of 40% is equally divided between the ratio of the NR intra-frequency measurement with the gap and the ratio of the NR inter-frequency measurement. Therefore, both of the gap utilization ratio of the NR intra-frequency measurement with the gap and the gap utilization ratio of the NR inter-frequency measurement are "20%."

Note that, the gap utilization ratio of the LTE inter-frequency measurement may be fixed to any value. Note also that, the gap utilization ratio of the LTE inter-frequency measurement may be notified to the terminal by predetermined signaling.

### <Example 2>

In Example 2, the gap utilization ratio between the LTE inter-frequency measurement and the NR intra-frequency measurement with the gap & NR inter-frequency measurement is determined using a parameter.

Specifically, the scheme indicated by MeasGapSharingScheme is used to determine the gap sharing factor (Kᵢₙₜₑᵣ) for the LTE inter-frequency measurement in the case of EN-DC independently of the number of measurement target carriers of the NR intra-frequency measurement with the gap & NR inter-frequency measurement.

For example, the gap utilization ratio between the LTE inter-frequency measurement and the NR intra-frequency measurement with the gap & NR inter-frequency measurement may be associated with each of the bit values indicated by MeasGapSharingScheme as follows.
- Bit value "00": "equal splitting" is applied to the gap utilization ratio among the LTE inter-frequency measurement, the NR intra-frequency measurement, and the NR inter-frequency measurement
- Bit value "01": the gap utilization ratio of the LTE inter-frequency measurement is "50%" and the gap utilization ratio of the NR intra-frequency measurement with the gap & NR inter-frequency measurement is "50%"
- Bit value "10": the gap utilization ratio of the LTE inter-frequency measurement is "25%" and the gap utilization ratio of the NR intra-frequency measurement with the gap & NR inter-frequency measurement is "75%"
- Bit value "11": the gap utilization ratio of the LTE inter-frequency measurement is "75%" and the gap utilization ratio of the NR intra-frequency measurement with the gap & NR inter-frequency measurement is "25%"

For example, when the bit value indicated by MeasGapSharingScheme is "11," the gap utilization ratio of the LTE inter-frequency measurement is "75%" and the gap utilization ratio of the NR intra-frequency measurement with the gap & NR inter-frequency measurement is "25%." Here, when the ratio of the NR intra-frequency measurement with the gap and NR inter-frequency measurement is equally divided, the gap utilization ratio of the NR intra-frequency measurement with the gap is "12.5%" and the gap utilization ratio of the NR inter-frequency measurement is "12.5%."

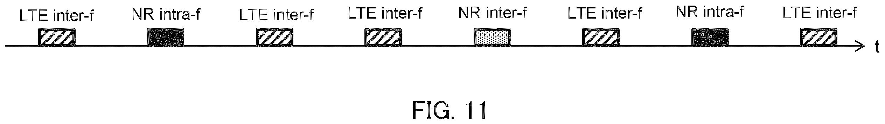

In this case, measurement is performed for the LTE inter-frequency by using the gap and approximately once every 1.3 gap timings (75%) as illustrated in FIG. 11. In addition, the NR intra-frequency measurement with the gap is performed using the gap and once every eight gap timings (12.5%) and the NR inter-frequency measurement is also performed using the gap and once every eight gap timings (12.5%).

Note that, the gap utilization ratio of each of the LTE inter-frequency measurement, NR intra-frequency measurement with the gap, and NR inter-frequency measurement may be configured as any value. Note also that, the ratio between the NR intra-frequency measurement with the gap and the NR inter-frequency measurement may be indicated by different signaling.

### <Example 3>

In Example 3, a combination of two of the LTE inter-frequency measurement, NR intra-frequency measurement with the gap, and NR inter-frequency measurement, and, the gap utilization ratio between the combination and the remaining one are determined using a parameter.

Specifically, ratios between which measurement and which measurement that are to be indicated by the scheme indicated by MeasGapSharingScheme are switched.

For example, the combination of two of the LTE inter-frequency measurement, NR intra-frequency measurement with the gap, and NR inter-frequency measurement, and, the gap utilization ratio between the combination and the remaining one may be associated with each of the bit values indicated by MeasGapSharingScheme as follows.
- Bit value "00": "equal splitting" is applied to the gap utilization ratio among the LTE inter-frequency measurement, the NR intra-frequency measurement, and the NR inter-frequency measurement
- Bit value "01": the gap utilization ratio of the LTE inter-frequency measurement is "50%" and the gap utilization ratio of the NR intra-frequency measurement with the gap & NR inter-frequency measurement is "50%"
- Bit value "10": the gap utilization ratio of the NR intra-frequency measurement is "50%" and the gap utilization ratio of the LTE inter-frequency measurement & NR inter-frequency measurement is "50%"
- Bit value "11": the gap utilization ratio of the NR inter-frequency measurement is "50%" and the gap utilization ratio of the NR intra-frequency measurement & LTE inter-frequency measurement is "50%"

For example, when the bit value indicated by MeasGapSharingScheme is "11," the gap utilization ratio of the NR inter-frequency is "50%." The gap utilization ratio of the NR intra-frequency measurement with the gap & LTE inter-frequency measurement is "25%." Here, when the ratio of the NR intra-frequency measurement and LTE inter-frequency measurement is equally divided, the gap utilization ratio of the NR intra-frequency measurement with the gap is "25%" and the gap utilization ratio of the LTE inter-frequency measurement is "25%."

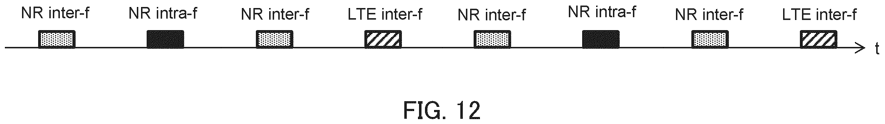

In this case, measurement is performed for the NR inter-frequency by using the gap and once every two gap timings (50%) as illustrated in FIG. 12. The NR intra-frequency measurement with the gap is performed using the gap and once every four gap timings (25%). The LTE inter-frequency measurement is performed using the gap and once every four gap timings (25%).

Note that, the combination of two of the LTE inter-frequency measurement, NR intra-frequency measurement with the gap, and NR inter-frequency measurement may be any combination. Note also that, the gap utilization ratio between the combination and the remaining one may be configured as any value. Note also that, the combination may be indicated by the parameter according to Example 3 and the value of the gap utilization ratio may be indicated by different signaling.

### <Notes>

Whether the present embodiment is applied or not may be switched between the case of EN-DC and the other cases (e.g., NR standalone or NR - E-UTRA Dual Connectivity (NE-DC)). For example, the present embodiment may be applied in the case of EN-DC, while in the other cases, the present embodiment does not have to be applied.

Different interpretations of notified content of the gap sharing scheme in measurement in NR may be switched depending on which of FR1 and FR2 is the measurement target frequency. For example, the weighting of the ratios of the NR intra-frequency measurement with the gap and the NR inter-frequency measurement may be changed in Example 2 depending on whether or not NR FR1 is included in the NR intra-frequency measurement with the gap & NR inter-frequency measurement. Note also that, different interpretations of notified content of the gap sharing scheme in measurement in NR may be switched depending on which of the per-UE-gap and per-FR-gap is applied. For example, the gap sharing scheme may be interpreted in the same way as in the above examples when the per-UE-gap is applied. On the other hand, when the per-FR-gap is applied, the gap sharing scheme may be interpreted about gap utilization for FR1 in the same way as in the above examples while it may also be interpreted about gap utilization for FR2 in a traditional way (e.g., the gap sharing scheme may be interpreted as a gap utilization ratio between the NR intra-frequency measurement with the gap and the NR inter-frequency) since only the NR intra-frequency measurement with the gap & NR inter-frequency measurement needs to be taken into account.

Additionally, the aforementioned switching may be indicated by signaling or may be uniquely defined by the specification.

The present embodiment is not limited to Dual Connectivity (DC) for which LTE is the PCell. For example, the present embodiment is applicable to NR Standalone or DC for which NR is the PCell. For example, in the case of NR Standalone or DC for which NR is the PCell, the priority level of the NR intra-frequency measurement and/or the NR inter-frequency measurement may be made higher in terms of gap utilization ratio than that of the LTE frequency. Note additionally that, the aforementioned second cell may be called Secondary Cell (SCell) in this case.

Although the present embodiment has been described in which the LTE inter-frequency measurement and the NR intra-frequency measurement and NR inter-frequency measurement are the examples of the terms of the gap utilization ratio, the terms of the gap utilization ratio are not limited to the examples. For example, 3G or Global System for Mobile communications (GSM) may be included in other inter-RATs and may be a measurement target. In this case, the present embodiment may be applied, with such other inter-RATs as described above being included in the measurement (e.g., the NR intra-frequency measurement & NR inter-frequency measurement) other than the measurement (e.g., LTE inter-frequency measurement) to be prioritized in terms of gap utilization ratio.

### <Example of Configuration of Base Station and Terminal>

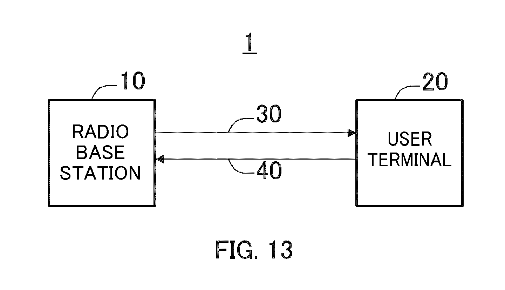

Next, a description will be given of an example of configuration of aforementioned base station 10 and terminal 20 with reference to FIGS. 13 to 15.

Radio communication system 1 includes base station 10 and terminal 20 as illustrated in FIG. 13. Base station 10 transmits Downlink (DL) signal 30 to terminal 20. DL signal 30 includes a DL data signal (e.g., a Physical Downlink Shared Channel (PDSCH) signal) and a DL control signal (e.g., a Physical Downlink Control Channel (PDCCH) signal), for example.

Terminal 20 transmits Uplink (UL) signal 40 to base station 10 as illustrated in FIG. 13. UL signal 40 includes a UL data signal (e.g., a Physical Uplink Shared Channel (PUSCH) signal) and a UL control signal (e.g., a Physical Uplink Control Channel (PUCCH) signal), for example.

### <Configuration of Transmitter>

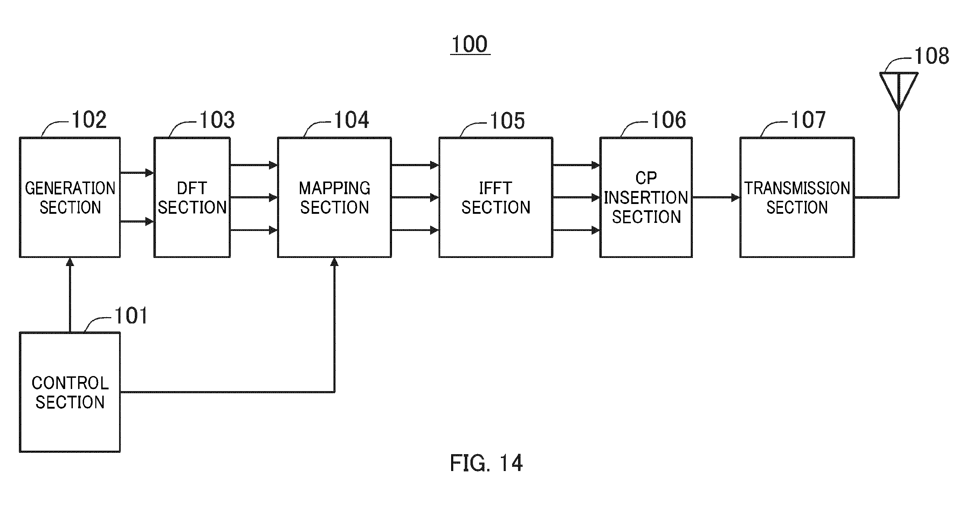

FIG. 14 illustrates an example of configuration of a transmitter. Transmitter 100 of base station 10 transmits DL signal 30. Transmitter 100 of terminal 20 transmits UL signal 40.

Transmitter 100 illustrated in FIG. 14 includes control section 101, generation section 102, and Discrete Fourier Transform (DFT) section 103, mapping section 104, Inverse Fast Fourier Transform (IFFT) section 105, Cyclic Prefix (CP) insertion section 106, transmission section 107, and antenna 108. An Orthogonal Frequency Division Multiplexing (OFDM) symbol is generated by DFT section 103, mapping section 104, IFFT section 105, and CP insertion section 106.

Control section 101 controls generation section 102 and mapping section 104. For example, control section 101 in transmitter 100 of base station 10 performs scheduling (resource assignment or the like) for terminals 20, and controls generation section 102 and mapping section 104 based on the scheduling. Moreover, control section 101 generates signaling information.

Generation section 102 assigns a signal to be transmitted to receiver 200 to the time domain of a radio resource based on the control by control section 101 to generate a time domain signal, and outputs the generated time domain signal to DFT section 103.

DFT section 103 performs the discrete Fourier transform on the time domain signal converted from serial to parallel form, and outputs a resulting frequency domain signal to mapping section 104.

Mapping section 104 maps the frequency domain signal output from DFT section 103 to a plurality of subcarriers based on the control by control section 101, and maps zero to subcarriers other than the subcarriers to which the frequency domain signal is mapped. Mapping section 104 then outputs the mapped frequency domain signal to IFFT section 105.

IFFT section 105 performs the inverse fast Fourier transform on the frequency domain signal output from mapping section 104, and outputs the obtained time domain signal to CP insertion section 106.

CP insertion section 106 inserts a CP to the time domain signal output from IFFT section 105, and outputs a resulting signal to transmission section 107.

Transmission section 107 performs Radio Frequency (RF) processing, such as Digital-to-Analog (D/A) conversion, upconversion, amplification, and/or the like on the time domain signal output from CP insertion section 106, and transmits a radio signal to receiver 200 via antenna 108.

### <Configuration of Receiver>

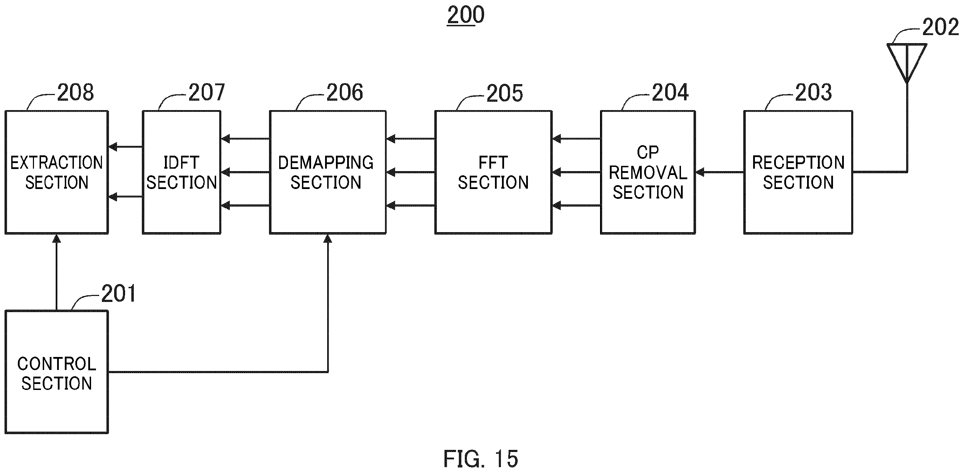

FIG. 15 illustrates an example of configuration of a receiver. Receiver 200 of terminal 20 receives DL signal 30. Receiver 200 of base station 10 receives UL signal 40.

Receiver 200 illustrated in FIG. 15 includes control section 201, antenna 202, reception section 203, CP removal section 204, Fast Fourier Transform (FFT) section 205, demapping section 206, Inverse Discrete Fourier Transform (IDFT) section 207, and extraction section 208. An OFDM symbol is extracted by CP removal section 204, FFT section 205, demapping section 206, and IDFT section 207.

Control section 201 controls demapping section 206 and extraction section 208. Control section 201 also controls the operation of receiver 200 using the signaling information. Moreover, control section 201 controls the measurement in the measurement gap described above.

A radio signal received by antenna 202 is input to reception section 203. Reception section 203 performs RF processing, such as amplification, downconversion, Analog-to-Digital (A/D) conversion, and/or the like on the radio signal received by antenna 202, and outputs a baseband time domain signal to CP removal section 204.

CP removal section 204 removes a CP of the time domain signal output from reception section 203, and outputs the time domain signal to FFT section 205.

FFT section 205 performs the fast Fourier transform on the time domain signal output from CP removal section 204, and outputs the obtained frequency domain signal to demapping section 206.

Demapping section 206 selects object subcarriers and punctures unnecessary subcarriers of the signal output from FFT section 205 based on the control by control section 201, and outputs the frequency domain signal to IDFT section 207.

IDFT section 207 performs the inverse discrete Fourier transform on the frequency domain signal output from demapping section 206 to obtain a time domain signal. IDFT section 207 outputs this time domain signal to extraction section 208.

Extraction section 208 extracts an intended signal from the time domain signal based on the control by control section 201.

### <Roundup of Embodiment>

The measurement period (e.g., Measurement Gap) for measuring the quality is specified for the first signal and the second signal in the present embodiment, and the user terminal includes: the reception section that receives the first signal based on the first radio communication (e.g., LTE) and the second signal based on the second radio communication (e.g., NR); the control section that controls priority levels (e.g., gap utilization ratio) for quality measurements of the first radio communication and the second radio communication. The quality measurements are performed using the measurement periods.

According to this configuration, the connection stability of moving user terminal 20 can be enhanced by making it possible to appropriately control the priority levels.

The embodiments of the present disclosure have been described above.

### (Hardware Configuration)

Note that the block diagrams used to describe the embodiments illustrate blocks on the basis of functions. These functional blocks (constituent sections) are implemented by any combination of hardware and/or software. A means for implementing the functional blocks is not particularly limited. That is, the functional blocks may be implemented by one physically and/or logically coupled apparatus. Two or more physically and/or logically separated apparatuses may be directly and/or indirectly (for example, via wires and/or wirelessly) connected, and the plurality of apparatuses may implement the functional blocks.

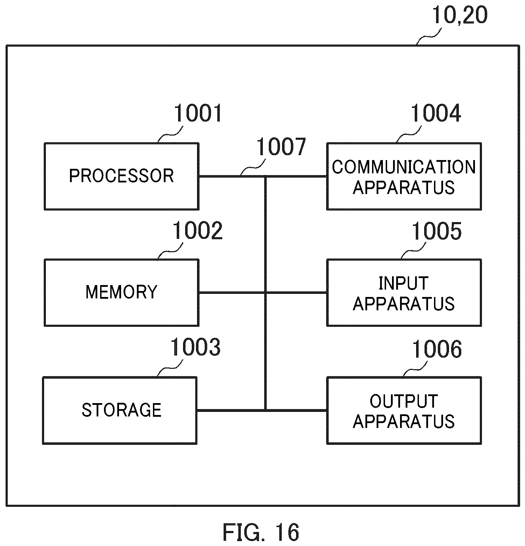

For example, base station 10, user terminal 20, and the like according to an embodiment of the present disclosure may function as a computer that executes processing of a radio communication method of the present disclosure. FIG. 16 illustrates an example of a hardware configuration of base station 10 and user terminal 20 according to an embodiment of the present disclosure. Base station 10 and user terminal 20 described above may be physically constituted as a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configurations of the base station and of the user terminal may include one apparatus or a plurality of apparatuses illustrated in the drawings or may not include part of the apparatuses.

For example, although only one processor 1001 is illustrated, there may be a plurality of processors. The processing may be executed by one processor, or the processing may be executed by one or more processors at the same time, in succession, or in another manner. Note that processor 1001 may be implemented by one or more chips.

The functions in the base station and user terminal are implemented by predetermined software (program) loaded into hardware, such as processor 1001, memory 1002, and the like, according to which processor 1001 performs the arithmetic and controls communication performed by communication apparatus 1004 or reading and/or writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, the processing as described above may be implemented by processor 1001. In addition, a necessary table may be stored in memory 1002.

Processor 1001 reads out a program (program code), a software module, or data from storage 1003 and/or communication apparatus 1004 to memory 1002 and executes various types of processing according to the read-out program or the like. The program used is a program for causing the computer to execute at least part of the operation described in the embodiments. For example, at least part of the functional blocks constituting base station 10 and user terminal 20 may be implemented by a control program stored in memory 1002 and operated by processor 1001, and the other functional blocks may also be implemented in the same way. While it has been described that the various types of processing as described above are executed by one processor 1001, the various types of processing may be executed by two or more processors 1001 at the same time or in succession. Processor 1001 may be implemented by one or more chips. Note that the program may be transmitted from a network through a telecommunication line.

Memory 1002 is a computer-readable recording medium and may be composed of, for example, at least one of a ROM (Read Only Memory), an EPROM (Erasable Programmable ROM), an EEPROM (Electrically Erasable Programmable ROM), and a RAM (Random Access Memory). Memory 1002 may be called a register, a cache, a main memory (main storage apparatus), or the like. Memory 1002 can save a program (program code), a software module, and the like that can be executed to carry out the radio communication method according to an embodiment of the present disclosure.

Storage 1003 is a computer-readable recording medium and may be composed of, for example, at least one of an optical disk such as a CD-ROM (Compact Disc ROM), a hard disk drive, a flexible disk, a magneto-optical disk (for example, a compact disc, a digital versatile disc, or a Blue-ray (registered trademark) disc), a smart card, a flash memory (for example, a card, a stick, or a key drive), a floppy (registered trademark) disk, and a magnetic strip. Storage 1003 may also be called an auxiliary storage apparatus. The storage medium as described above may be a database, server, or other appropriate media including memory 1002 and/or storage 1003.

Communication apparatus 1004 is hardware (transmission and reception device) for communication between computers through a wired and/or wireless network and is also called, for example, a network device, a network controller, a network card, or a communication module. For example, transmission section 107, reception section 203, antennas 108 and 202, and the like as described above may be implemented by communication apparatus 1004.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which outputs to the outside. Note that input apparatus 1005 and output apparatus 1006 may be integrated (for example, a touch panel).

The apparatuses, such as processor 1001 and memory 1002, are connected by bus 1007 for communication of information. Bus 1007 may be composed of a single bus or by buses different among the apparatuses.

Furthermore, base station 10 and user terminal 20 may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented by at least one of these pieces of hardware.

### (Notification and Signaling of Information)

The notification of information is not limited to the aspects or embodiments described in the present specification, and the information may be notified by another method. For example, the notification of information may be carried out by one or a combination of physical layer signaling (for example, DCI (Downlink Control Information) and UCI (Uplink Control Information)), higher layer signaling (for example, RRC (Radio Resource Control) signaling, MAC (Medium Access Control) signaling, broadcast information (MIB (Master Information Block), and SIB (System Information Block))), and other signals. The RRC signaling may be called an RRC message and may be, for example, an RRC connection setup message, an RRC connection reconfiguration message, or the like.

### (Adaptive System)

The aspects and embodiments described in the present specification may be applied to a system using LTE (Long Term Evolution), LTE-A (LTE-Advanced), SUPER 3G, IMT-Advanced, 4G, 5G FRA (Future Radio Access), W-CDMA (registered trademark), GSM (registered trademark), CDMA2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), or other appropriate systems and/or to a next-generation system extended based on the above systems.

### (Processing Procedure and the like)

The orders of the processing procedures, the sequences, the flow charts, and the like of the aspects and embodiments described in the present specification may be changed as long as there is no contradiction. For example, elements of various steps are presented in exemplary orders in the methods described in the present specification, and the methods are not limited to the presented specific orders.

### (Operation of Base Station)

Specific operations which are described in the specification as being performed by the base station (radio base station) may sometimes be performed by an upper node depending on the situation. Various operations performed for communication with a terminal in a network constituted by one network node or a plurality of network nodes including a base station can be obviously performed by the base station and/or a network node other than the base station (examples include, but not limited to, MME (Mobility Management Entity) or S-GW (Serving Gateway)). Although there is one network node in addition to the base station in the case illustrated above, a plurality of other network nodes may be combined (for example, MME and S-GW).

### (Direction of Input and Output)

The information, the signals, and the like can be output from a higher layer (or a lower layer) to a lower layer (or a higher layer). The information, the signals, and the like may be input and output through a plurality of network nodes.

### (Handling of Input and Output Information and the like)

The input and output information and the like may be saved in a specific place (for example, memory) or may be managed by a management table. The input and output information and the like can be overwritten, updated, or additionally written. The output information and the like may be deleted. The input information and the like may be transmitted to another apparatus.

### (Determination Method)

The determination may be made based on a value expressed by one bit (0 or 1), based on a Boolean value (true or false), or based on comparison with a numerical value (for example, comparison with a predetermined value).

### (Software)

Regardless of whether the software is called software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, and the like may be transmitted and received through a transmission medium. For example, when the software is transmitted from a website, a server, or another remote source by using a wired technique, such as a coaxial cable, an optical fiber cable, a twisted pair, and a digital subscriber line (DSL), and/or a wireless technique, such as an infrared ray, a radio wave, and a microwave, the wired technique and/or the wireless technique is included in the definition of the transmission medium.

### (Information and Signals)

The information, the signals, and the like described in the present specification may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present specification and/or the terms necessary to understand the present specification may be replaced with terms with the same or similar meaning. For example, the channel and/or the symbol may be a signal. The signal may be a message. The component carrier (CC) may be called a carrier frequency, a cell, or the like.

### ("System" and "Network")

The terms "system" and "network" used in the present specification can be interchangeably used.

### (Names of Parameters and Channels)

The information, the parameters, and the like described in the present specification may be expressed by absolute values, by values relative to predetermined values, or by other corresponding information. For example, radio resources may be indicated by indices.

The names used for the parameters are not limited in any respect. Furthermore, the numerical formulas and the like using the parameters may be different from the ones explicitly disclosed in the present specification. Various channels (for example, Physical Uplink Control Channel (PUCCH) and Physical Downlink Control Channel (PDCCH)) and information elements (for example, TPC) can be identified by any suitable names, and various names assigned to these various channels and information elements are not limited in any respect.

### (Base Station)

The base station (radio base station) can accommodate one cell or a plurality of (for example, three) cells (also called sector). When the base station accommodates a plurality of cells, the entire coverage area of the base station can be divided into a plurality of smaller areas, and each of the smaller areas can provide a communication service based on a base station subsystem (for example, small base station for indoor, remote radio head (RRH)). The term "cell" or "sector" denotes part or all of the coverage area of the base station and/or of the base station subsystem that perform the communication service in the coverage. Furthermore, the terms "base station", "eNB", "cell", and "sector" can be interchangeably used in the present specification. The base station may be called a fixed station, a NodeB, an eNodeB (eNB), an access point, a femto cell, a small cell, or the like.

### (Terminal)

The user terminal may be called, by those skilled in the art, a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or UE (User Equipment) or by some other appropriate terms.

### (Meaning and Interpretation of Terms)

As used herein, the term "determining" may encompass a wide variety of actions. For example, "determining" may be regarded as judging, calculating, computing, processing, deriving, investigating, looking up (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing and the like. That is, "determining" may be regarded as a certain type of action related to determining.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. When the terms are used in the present specification, two elements can be considered to be "connected" or "coupled" to each other by using one or more electrical wires, cables, and/or printed electrical connections or by using electromagnetic energy, such as electromagnetic energy with a wavelength of a radio frequency domain, a microwave domain, or an optical (both visible and invisible) domain that are non-limiting and non-inclusive examples.

The reference signal can also be abbreviated as RS and may also be called a pilot depending on the applied standard. The correction RS may be called a Tracking RS TRS), a Phase Compensation RS (PC-RS), a Phase Tracking RS (PTRS), or an additional RS. The demodulation RS and the correction RS may be called by other corresponding names, respectively. The demodulation RS and the correction RS may be specified by the same name (for example, demodulation RS).

The description "based on" used in the present specification does not mean "based only on," unless otherwise specifically stated. In other words, the description "based on" means both of "based only on" and "based at least on."

The "section" in the configuration of each apparatus may be replaced with "means," "circuit," "device," or the like.

The terms "including," "comprising," and modifications of these terms are intended to be inclusive just like the term "having," as long as the terms are used in the present specification or the appended claims. Furthermore, the term "or" used in the present specification or the appended claims is not intended to be an exclusive or.

The radio frame may be constituted by one frame or a plurality of frames in the time domain. The one frame or each of the plurality of frames may be called a subframe, a time unit, or the like in the time domain. The subframe may be further constituted by one slot or a plurality of slots in the time domain. The slot may be further constituted by one symbol or a plurality of symbols (OFDM (Orthogonal Frequency Division Multiplexing) symbol, SC-FDMA (Single Carrier-Frequency Division Multiple Access) symbol, or the like) in the time domain.

The radio frame, the subframe, the slot, and the symbol indicate time units in transmitting signals. The radio frame, the subframe, the slot, and the symbol may be called by other corresponding names.

For example, in the LTE system, the base station creates a schedule for assigning radio resources to each mobile station (such as frequency bandwidth that can be used by each mobile station and transmission power). The minimum time unit of scheduling may be called a TTI (Transmission Time Interval).

For example, one subframe, a plurality of continuous subframes, or one slot may be called a TTI.

The resource unit is a resource assignment unit in the time domain and the frequency domain, and the resource unit may include one subcarrier or a plurality of continuous subcarriers in the frequency domain. In addition, the resource unit may include one symbol or a plurality of symbols in the time domain, and may have a length of one slot, one subframe, or one TTI. One TTI and one subframe may be constituted by one resource unit or a plurality of resource units. The resource unit may be called a resource block (RB), a physical resource block (PRB: Physical RB), a PRB pair, an RB pair, a scheduling unit, a frequency unit, or a subband. The resource unit may be constituted by one RE or a plurality of REs. For example, one RE only has to be a resource smaller in unit size than the resource unit serving as a resource assignment unit (for example, one RE only has to be a minimum unit of resource), and the naming is not limited to RE.

The structure of the radio frame is illustrative only, and the number of subframes included in the radio frame, the number of slots included in the subframe, the numbers of symbols and resource blocks included in the slot, and the number of subcarriers included in the resource block can be changed in various ways.

When articles, such as "a," "an," and "the" in English, are added by translation in the entire disclosure, the articles include plural forms unless otherwise clearly indicated by the context.

### (Variations and the like of Aspects)

The aspects and embodiments described in the present specification may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiments described in the present specification. Modifications and variations of the aspects of the present disclosure can be made without departing from the spirit and the scope of the present disclosure defined by the description of the appended claims. Therefore, the description of the present specification is intended for exemplary description and does not limit the present disclosure in any sense.

### Industrial Applicability

One aspect of the present disclosure is useful for a mobile communication system.

### Reference Signs List

1 Radio Communication System
10 Radio base station
20 User terminal
100 Transmitter
101 Control section
102 Generation Section
103 DFT section
104 Mapping section
105 IFFT section
106 CP insertion section
107 Transmission section
108 Antenna
200 Receiver
201 Control section
202 Antenna
203 Reception section
204 CP removal section
205 FFT section
206 Demapping section
207 IDFT section
208 Extraction section

## Claims

1. A user terminal, comprising:
a reception section that receives a first signal based on first radio communication and a second signal based on second radio communication, measurement periods for quality measurement being specified for the first and the second signals; and
a control section that controls priority levels for quality measurements of the first radio communication and the second radio communication, the quality measurements being performed using the measurement periods.

2. The user terminal according to claim 1, wherein
the control section controls the priority levels when both of the first radio communication and the second radio communication are available.

3. The user terminal according to claim 1, wherein
the priority levels are a value indicating a utilization ratio of the measurement periods specified for the first signal and the second signal.

4. The user terminal according to claim 3, wherein
the utilization ratio of the measurement periods specified for the first signal and the second signal is predetermined, and
a utilization ratio of measurement periods specified respectively for a plurality of the second signals with frequencies different from one another is indicated by signaling from a radio base station.

5. The user terminal according to claim 3, wherein
the utilization ratio of the measurement periods specified for the first signal and the second signal is indicated by signaling from a radio base station.

6. The user terminal according to claim 3, wherein
measurement periods are specified respectively for a plurality of the second signals with frequencies different from one another, and
a combination of two of the first signal and the plurality of the second signals, and, a utilization ratio of the measurement periods for the combination and remaining one of the first signal and the plurality of the second signals are indicated by signaling from a radio base station.
